# FASCICULE DE BREVET EUROPEEN

(11) **EP 1 616 907 B1**
(45) Date de publication et mention de la délivrance du brevet: **16.11.2016**
(21) Numéro de dépôt: 05291462.9
(22) Date de dépôt: 06.07.2005
(51) Int. Cl.: C08L 23/02, C08L 23/06

(54) **Mélange maitre à base de polymère fluoré et son utilisation pour l'extrusion des polyoléfines**
Masterbatch Zusammensetzung basiert auf Fluorinierte-Polymere und Verwendung zur Extrusion von Polyolefinen
Masterbatch composition based on fluoropolymer and its use for the extrusion of polyolefins

(30) Priorité: 16.07.2004 FR 0407919
(43) Date de publication de la demande: 18.01.2006
(73) Titulaire: ARKEMA FRANCE, 92700 Colombes (FR)
(72) Inventeur: Barriere, Benoit, 27170 Le Tilleul Othon (FR); Bonnet, Anthony, 27170 Beaumont-le-Roger (FR); Laffargue, Johann, 27300 Bernay (FR); Marot, Gilles, 27300 Bernay (FR)

(56) Documents cités:
- EP-A- 1 462 483
- US-A- 5 015 693
- US-A- 5 587 429
- US-A- 6 048 939
- US-A1- 2003 236 357
- US-B1- 6 734 252

## Description

### [Domaine de l'invention]

La présente invention concerne un mélange maître à base de polymère fluoré et son utilisation pour l'extrusion des polyoléfines. Au cours de l'extrusion des polyoléfines des irrégularités de l'écoulement peuvent apparaître à la sortie de la filière ce qui entraîne des défauts de surface et parfois l'altération des propriétés mécaniques. Le remède consiste à ajouter un agent d'aide à la mise en oeuvre (appelé aussi "processing aid") dans la polyoléfine qui doit être extrudée. Ce processing aid comprend un polymère fluoré et un agent d'interface qui sont dilués dans une polyoléfine identique ou peu différente de la polyoléfine qu'on veut extruder. Cette polyoléfine contenant le polymère fluoré et l'agent d'interface est aussi appelée "mélange maître". Le mélange maître est ajouté dans la polyoléfine à extruder en un point quelconque avant la filière d'extrusion. L'invention concerne ces mélanges maîtres.

### [L'art antérieur et le problème technique]

Au cours de l'extrusion d'une matière plastique, en particulier des polyoléfines, des irrégularités de l'écoulement apparaissent à la sortie de la filière lorsqu'on dépasse un taux de cisaillement critique. En dessous, les extrudés sont lisses alors qu'au-dessus de ce taux critique on observe des défauts de surface. Ces défauts qu'on appelle "melt fracture" se présentent sous plusieurs formes. A taux de cisaillement légèrement supérieur au taux critique, les films obtenus par extrusion-soufflage perdent leur transparence et leur brillance. Pour des taux nettement supérieurs, ce qui correspondent à une productivité plus élevée, des défauts d'homogénéité avec des zones lisses dans une surface rugueuse apparaissent. Ces défauts diminuent de manière significative les propriétés optiques et mécaniques du film. Les mêmes phénomènes peuvent être observés sur des joncs extrudés. Lorsque la surface des joncs perd leur brillance et devient terne et rugueuse, elle est souvent comparée à une "peau d'orange".

L'art antérieur a déjà proposé l'ajout de processing aids.

Ainsi, dans le brevet US 3334157**,** l'incorporation du polytetrafluoroéthylène améliore les propriétés optiques du film de polyéthylène.

Selon les brevets US 4855360**,** US 5587429**,** WO 00/44829 et WO 02/066544**,** un fluoroélastomère en combinaison avec un polyoxyalkylène (polyoxyéthylène glycol désigné aussi par PEG) est utilisé pour améliorer la transformation des polymères hydrocarbonés. Cependant le polymère fluoré et le PEG sont ajoutés tels quels, sans précaution particulière dans la polyoléfine pour constituer le mélange maître. Dans ces art antérieurs, le polymère fluoré et le PEG sont dilués dans une polyoléfine pour constituer un mélange maître puis le mélange maître est ajouté dans le polymère à extruder.

Dans US 5015693**,** le PEG et le fluoropolymère peuvent être mélangés tous les deux étant à l'état fondu avant d'être introduit dans la matière à extruder. Le mélange ne peut être très intime. En effet, un fluoropolymère présente généralement une température de fusion de l'ordre de 200-300°C et qu'à cette température le PEG présente une viscosité très faible, le rendant peu apte à être mélangé intimement avec le fluoropolymère.

Les organophosphates ou organophosphites en combinaison avec un fluoroélastomère ont été décrits dans les brevets US 4983677 et US 4863983 pour améliorer également la transformation des polymères hydrocarbonés.

On a maintenant découvert que si on mélange au préalable le polymère fluoré et le PEG de façon intime avant de les ajouter dans la polyoléfine pour constituer le mélange maître, on obtient une meilleure efficacité du processing aid. "Meilleure efficacité" s'entend par comparaison avec un mélange maître préparé par la simple addition du polymère fluoré et du PEG sans mélange préalable de façon intime avant de les ajouter dans la polyoléfine pour constituer le mélange maître.

### [Brève description de l'invention]

La présente invention concerne un mélange maître comprenant en poids:
- de 1 à 50% d'un mélange d'au moins un polymère fluoré (A) et d'au moins un agent d'interface (B),
- de 99 à 50% d'une polyoléfine (C),
- tel que les deux constituants (A) et (B) ont été d'abord mélangés de façon intime c'est-à-dire par un moyen choisi parmi le compactage dans une presse chauffée, l'injection dans un moule chauffé, l'extrusion et le malaxage à une température telle que l'agent d'interface(B) soit à l'état fondu dans sa masse ou à sa surface, et le polymère fluoré (A) à l'état solide, sous forme d'une poudre, puis sont ensuite mélangés avec la polyoléfine (C),
le mélange de (A) et de (B) étant réalisé entre 20 et 100°C.

Le mélange maître se présente sous forme de granulés ou d'une poudre.

L'invention concerne aussi le procédé d'obtention du mélange maître dans lequel :
1). on mélange au moins un polymère fluoré (A) et au moins un agent d'interface (B), de façon intime comme décrit plus haut;
2). le mélange obtenu à l'étape 1). est ensuite incorporé dans une polyoléfine (C) au moyen d'un outil de mélange choisi parmi les extrudeuses et les malaxeurs pour former le mélange maître sous forme de granulés ;
3). éventuellement, les granulés de mélange maître de l'étape 2 sont rebroyés pour obtenir une poudre du mélange maître.

L'invention concerne aussi l'utilisation du mélange maître comme processing aid pour extruder une polyoléfine (D), en particulier pour extruder une polyoléfine sous forme de film.

Le polymère fluoré est du poly(fluorure de vinylidène) (PVDF) homopolymère ou copolymère et contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 2000 Pa.s, la viscosité étant mesurée à 230°C, à un gradient de cisaillement de 100 s⁻¹à l'aide d'un rhéomètre capillaire. De préférence, le PVDF a une viscosité allant de 300 Pa.s à 1200 Pa.s, la viscosité étant mesurée à 230°C, à un gradient de cisaillement de 100 s⁻¹ à l'aide d'un rhéomètre capillaire.

Ainsi, les PVDF commercialisés sous la marque KYNARFLEX^{®} sont parfaitement adaptés pour cette formulation et ce procédé.

**S'agissant de l'agent d'interface (B),** on désigne ainsi tout produit tel que mélangé avec (A) dans les conditions citées plus haut pour faire un mélange maître puis ce mélange maître étant utilisé comme processing aid, l'extrusion des polyoléfines est améliorée. A titre d'exemple d'agent d'interface (B), on peut citer les silicones, les copolymères silicones-polyéthers, les polyesters aliphatiques, les polyesters aromatiques tels que par exemple le diisobutyl ester d'acide phtalique, les polyéthers tels que par exemple les polyéthers polyols et les poly(oxyde d'alkylène), les oxydes d'amine tels que par exemple l'oxyde d'octyldiméthyl amine, des acides carboxyliques tels que par exemple l'hydroxy-butanedioïque acide, des esters d'acide gras. A titre d'exemple de polyester aliphatique, on peut citer l'acide polylactique et les polycaprolactones.

Avantageusement, (B) est un polyéther et de préférence choisi parmi des oligomères ou des polymères ayant des motifs oxyde d'alkylène (par ex. oxyde d'éthylène ou de propylène). On peut citer à titre d'exemple le poly(oxyéthylène)glycol appelé communément polyéthylène glycol (PEG), avantageusement la masse moléculaire moyenne en nombre *M̅n̅* est comprise entre 400 et 15000 g/mole et la température de fusion comprise entre 50 et 80°C. A titre d'exemple de PEG on peut citer le PLURIOL E® de la société BASF ou le POLYGLYKOL® de la société CLARIANT. On ne sortirait pas du cadre de l'invention en utilisant un mélange de deux ou plusieurs polyéthers.

Ces PEG et d'autres exemples de PEG sont décrits dans les brevets US 5587429 et US 5015693**.** Ainsi, on peut citer :
- le polyéthylène glycol de formule H(OC₂H₄)ₙOH où n est un entier proche de 76, compris entre 70 et 80 ;
- H(OC₂H₄)_{d}[OCH(CH₃)CH₂]ₑ(OC₂H₄)_{f}OH où d, e et f désignent des entiers avec d+f est proche de 108, compris entre 100 et 110, et e proche de 35, entre 30 et 40 ;
- le CARBOWAX 3350 ayant une masse moléculaire moyenne en nombre d'environ 3500 g/mol ;
- le CARBOWAX 8000 ayant une masse moléculaire moyenne en nombre d'environ 8000 g/mol.

**S'agissant du procédé de préparation du mélange maître de l'invention,** celui-ci comporte les étapes suivantes :
1). on mélange au moins un polymère fluoré (A) et au moins un agent d'interface (B) de façon intime;
2). le mélange obtenu à l'étape 1). est ensuite incorporé dans une polyoléfine (C) pour former le mélange maître sous forme de granulés ;
3). éventuellement, les granulés de mélange maître de l'étape 2 sont rebroyés pour obtenir une poudre du mélange maître.

L'étape 1 est réalisée à l'aide d'un moyen pour que les deux constituants (A) et (B) soient mélangés de façon intime choisi parmi le compactage dans une presse chauffée, l'injection dans un moule chauffé, l'extrusion et le malaxage. On préfère l'extrusion ou le compactage.

Le mélange intime de (A) et (B) est effectué à une température comprise entre 20 et 100°C. A cette température l'agent d'interface (B) présente une viscosité pas trop faible pour pouvoir être mélangé efficacement avec le polymère fluoré (A) et former un mélange intime. La température est choisie pour que l'agent d'interface (B) soit à l'état fondu dans sa masse ou à sa surface, de préférence dans sa masse, et le polymère fluoré (A) à l'état solide.

Une température inférieure à 100°C permet de ne pas dégrader thermiquement l'agent d'interface (B) ce qui pourrait affecter son efficacité dans le mélange ou conduire à un jaunissement. Pour favoriser aussi le mélange intime, le polymère fluoré (A) est sous forme d'une poudre, c'est-à-dire sous forme dispersée.

Au cours de l'étape 2, le mélange de l'étape 1 est incorporé dans une polyoléfine (C) pour former le mélange maître. On utilise pour cela un outil de mélange des matières plastiques, choisi parmi les extrudeuses et les malaxeurs. De préférence, il s'agit d'une extrudeuse. Le mélange maître obtenu à l'issue de l'étape 2 est sous forme de granulés.

Avantageusement, (C) et (D) sont proches. On entend par proche le fait que (C) et (D) soient deux polyoléfines de même nature, par ex. (C) et (D) sont deux polyéthylènes ou bien (C) et (D) sont deux polypropylènes, et/ou le fait que (C) et (D) ont des viscosités peu éloignées.

Avantageusement, la proportion de (A) et (B) est de 1 à 30% pour respectivement de 99 à 70% de (C), de préférence de 1 à 10% pour respectivement de 99 à 90% de (C), préférentiellement de 1,5 à 10% pour respectivement de 98,5 à 90% de (C), encore plus préférentiellement de 2 à 10% pour respectivement de 98 à 90% de (C).

Les proportions respectives de (A) et (B) en poids peuvent être telles que (A) / (B) est compris entre 10/90 et 90/10 et de préférence entre 30/70 et 70/30 et mieux encore entre 40/60 et 60/40.

L'étape 3 éventuelle consiste à rebroyer les granulés de mélange maître pour obtenir une poudre de mélange maître.

On ne sortirait pas du cadre de l'invention si des additifs de type absorbeurs UV ou antioxydants étaient ajoutés dans le mélange maître. Ils peuvent être ajoutés dans (A), dans (B) ou directement dans le mélange maître au cours de l'une des étapes 1 à 3.

### [Utilisation]

Ce mélange maître peut être incorporé en tant qu'additif (ou processing aid) dans une polyoléfine (D) et réduit de façon significative le temps permettant d'obtenir une extrusion stable et sans défaut dans une gamme de paramètre d'extrusion qui normalement présente des instabilités importantes d'extrusion.

Le mélange maître est particulièrement utile comme processing aid pour l'extrusion d'un film d'une polyoléfine (D). Le mélange maître est utilisé sous forme de granulés ou sous forme d'une poudre.

Le mélange maître peut être utilisé pour améliorer l'extrusion des polyoléfines suivantes :
- les polyéthylènes, notamment les polyéthylènes basse densité (LDPE), haute densité (HDPE), basse densité linéaire (LLDPE) ainsi que les polyéthylènes obtenus à l'aide d'un catalyseur du type métallocène ou plus généralement d'un catalyseur dit « monosite » ;
- les polypropylènes, notamment les polypropylènes iso- et syndiotactiques ;
- les polybutènes (obtenus à partir du butène-1) ;
- les poly(3-méthyl butène) et les poly(4-méthyl pentène).

Le mélange maître est particulièrement intéressant pour les polyéthylènes de haute masse moléculaire et/ou présentant une distribution de masses moléculaires étroites (typiquement telle que l'indice de polymolécularité est inférieur à 3, plutôt inférieur à 2,5, et encore mieux inférieur à 2,2).

Il est particulièrement utile pour l'extrusion une polyoléfine, notamment un polyéthylène, sous forme de film.

La proportion de mélange maître à introduire dans la polyoléfine à extruder (D) est avantageusement telle que la quantité de (A)+(B) par rapport à (D) est de l'ordre de 100 ppm à 3000 ppm.

### [Exemples]

Dans les exemples suivants tous les essais d'extrusion film ont été réalisés à 8 kg/heure. Dans les exemples ci-après, le polymère fondu (D) qui sert de base à cette étude est un mélange de 70% en masse de polyéthylène INNOVEX LL0209AA et de 30% en masse de polyéthylène LACQTENE 1003FE23. Ce mélange est nommé mélange (D).

**INNOVEX LL0209AA** désigne un polyéthylène basse densité linéaire de type de MFI 0,9 g/10 min sous 190°C, 2,16 kg vendu par BP Chemicals. **LACQTENE 1003FE23** désigne un polyéthylène basse densité de MFI (abréviation de Melt Flow Index ou indice de fluidité à l'état fondu) 0,3 g/10 min sous 190°C, 2,16 kg vendu par TOTAL PETROCHEMICALS (auparavant vendu par ATOFINA).
**KYNARFLEX®2821** : PVDF copolymère thermoplastique VF2-HFP sous forme de poudre fabriqué par ARKEMA (auparavant par ATOFINA) de MVI (Melt Volume Index ou indice de fluidité volumique à l'état fondu) 1,5 cm³/10 minutes sous une charge de 5 kg à 230°C.

### Exemple 1 (selon l'invention) :

On prépare sur extrudeuse bi-vis de type Haake 2 un mélange de 45% en masse de poudre de PEG (POLYGLYKOL® 10 000) de la société CLARIANT de masse molaire 10 000 g/mol avec 55% en masse d'une poudre de PVDF co HFP (KYNAR FLEX 2821, température de fusion vers 190°C) de la société ARKEMA. Ce mélange est réalisé à 90°C. Le jonc obtenu est tiré sur une bande sans fin et granulé. Ce produit est ensuite incorporé par extrusion monovis à hauteur de 5 % en masse dans un polyéthylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange maître MM précédemment décrit est introduit à hauteur de 1 % en masse. Le défaut disparaît totalement au bout de 90 minutes après l'introduction du mélange maître MM.

### Exemple 2 (selon l'invention) :

On prépare sur une machine de compactage un mélange de 45% en masse de poudre de PEG (POLYGLYKOL® 10 000) de la société CLARIANT de masse molaire 10 000 g/mol avec 55% en masse d'une poudre de PVDF co HFP (KYNAR FLEX 2821) de la société ARKEMA. Ce mélange est réalisé à 20°C. Les granulés obtenus sont ensuite incorporés par extrusion monovis à hauteur de 5 % en masse dans un polyéthylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. 90 minutes après l'introduction du mélange maître il reste du défaut résiduel sur une faible surface du film produit.

### Exemple 3 (comparatif) :

On prépare un mélange à sec de 45% en masse de poudre de PEG (POLYGLYKOL® 10 000) de la société CLARIANT de masse molaire 10 000 g/mol avec 55% en masse d'une poudre de PVDF co HFP (KYNARFLEX 2821) de la société ARKEMA. Ce mélange est réalisé à 20°C. Ce produit est ensuite incorporé par extrusion à hauteur de 5 % en masse dans un polyéthylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut persiste sur une partie importante du film produit 90 min après l'introduction du mélange maître.

### Exemple 4 (comparatif) :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 120 minutes d'extrusion le défaut persiste sur la totalité du film produit, l'expérience est stoppée.

### Exemple 5 (selon l'invention) :

On prépare sur une machine de compactage un mélange de 45% en masse de PEG (POLYGLYKOL®10000) de la société CLARIANT de masse molaire 8000 g/mol avec 55% en masse d'une poudre de PVDF co HFP (KYNAR FLEX 2821) de la société ARKEMA. Ce mélange est réalisé à 20°C. Les granulés obtenus sont ensuite incorporés par extrusion monovis à hauteur de 2 % en masse dans un polyéthylène métallocène M1 de densité 0,927. Ce mélange maître (MM) qui se présente sous forme de granulés est ensuite testé en tant qu'agent d'aide à la mise en oeuvre suivant le protocole décrit ci-après :

Extrusion à 190°C du polyéthylène métallocène M1, sur une ligne d'extrusion de la société COLLIN de diamètre de vis 30 mm, de L/D = 25 avec une filière plate de 50 mm de large et de 0,5 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut disparaît au bout de 60 minutes après l'introduction du mélange MM.

### Exemple 6 (comparatif) :

On prépare par un simple mélange à sec un mélange de 45% en masse de PEG (POLYGLYKOL®10000) de la société CLARIANT de masse molaire 8000 g/mol avec 55% en masse d'une poudre de PVDF co HFP (KYNARFLEX 2821) de la société ARKEMA. Ce mélange est réalisé à 20°C. La poudre obtenue est ensuite incorporée par extrusion monovis à hauteur de 2 % en masse dans un polyéthylène métallocène M1. Ce mélange maître (MM) qui se présente sous forme de granulés est ensuite testé en tant qu'agent d'aide à la mise en oeuvre suivant le protocole décrit ci-après :

Extrusion à 190°C du polyéthylène métallocène M1, sur une ligne d'extrusion de la société COLLIN de diamètre de vis 30 mm, de L/D = 25 avec une filière plate de 50 mm de large et de 0,5 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut persiste sur une grande partie de l'echantillon 60 minutes après l'introduction du mélange MM.

### Exemple 7 (comparatif) :

Extrusion à 190°C du polyéthylène métallocène M1, sur une ligne d'extrusion de la société COLLIN de diamètre de vis 30 mm, de L/D = 25 avec une filière plate de 50 mm de large et de 0,5 mm d'entrefer. Lors de cette extrusion le défaut « melt fracture » apparaît instantanément. Après 90 minutes d'extrusion le défaut persiste sur la totalité de l'echantillon.

### Exemple 8 (selon l'invention) :

On prépare sur un supercompoundeur de type ZSK40 un mélange de 45% en MASSE DE POUDRE DE PEG (POLYGLYKOL® 8000 PF) DE LA SOCIETE CLARIANT DE MASSE MOLAIRE 8 000 G/MOL AVEC 55% EN MASSE D'UNE POUDRE de PVDF co HFP (KYNAR FLEX 2821) de la société ARKEMA. Ce mélange est réalisé à 65°C. Le jonc obtenu est tiré sur une bande sans fin et granulé. Ce produit est ensuite incorporé par extrusion monovis à hauteur de 5 % en masse dans un polyethylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut disparaît totalement au bout de 60 minutes après l'introduction du mélange MM.

### Exemple 9 (selon l'invention) :

On prépare sur une machine de compactage un mélange de 45% en masse de poudre de PEG (POLYGLYKOL® 8 000 PF) de la société CLARIANT de masse molaire 8 000 g/mol avec 55% en masse d'une poudre de PVDF co HFP (KYNAR FLEX 2821) de la société ARKEMA. Ce mélange est réalisé à 20°C. Les granulés obtenus sont ensuite incorporés par extrusion monovis à hauteur de 5 % en masse dans un polyéthylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de UD = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut disparaît totalement au bout de 60 minutes après l'introduction du mélange MM.

### Exemple 10 (selon l'invention) :

Le mélange produit dans les conditions de l'exemple 8 sous forme de granulés est ensuite broyé à froid.
Cette poudre est ensuite incorporée par extrusion monovis à hauteur de 5 % en masse dans un polyethylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut disparaît totalement au bout de 60 minutes après l'introduction du mélange MM.

### Exemple 11 (selon l'invention) :

Le mélange produit dans les conditions de l'exemple 9 sous forme de granulés est ensuite broyé à froid.

Cette poudre est ensuite incorporée par extrusion monovis à hauteur de 5 % en masse dans un polyethylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut disparaît totalement au bout de 60 minutes après l'introduction du mélange MM.

### Exemple 12 (comparatif) :

On prépare un mélange à sec de 45% en masse de poudre de PEG (POLYGLYKOL® 8 000PF) de la société CLARIANT de masse molaire 8 000 g/mol avec 55% en masse d'une poudre de PVDF co HFP (KYNAR FLEX 2821) de la société ARKEMA. Ce mélange est réalisé à 20°C. Ce produit est ensuite incorporé par extrusion à hauteur de 5 % en masse dans un polyéthylène basse densité linéaire de type INNOVEX LL0209AA, de MFI 0,9 g/10 min sous 190°C, 2,16 kg. Ce mélange maître (MM) qui se présente sous forme de granulés est ensuite testé en tant qu'agent d'aide à la mise en oeuvre suivant le protocole décrit ci-après :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 15 minutes d'extrusion le mélange MM précédemment décrit est introduit à hauteur de 1 % en masse. Le défaut persiste sur une partie importante du film produit 60 min après l'introduction du mélange maître.

### Exemple 13 (comparatif) :

Extrusion à 190°C du mélange (D), sur une ligne d'extrusion soufflage de gaine de la société COLLIN de diamètre de vis 30 mm, de L/D = 25 avec une filière de 50,5 mm de diamètre et de 0,8 mm d'entrefer. Lors de cette extrusion le défaut « melt fracture » apparaît instantanément. Après 120 minutes d'extrusion, le défaut persiste sur la totalité du film produit, l'expérience est stoppée.

## Revendications

1. Mélange maître comprenant en poids:
• de 1 à 50% d'un mélange d'au moins un polymère fluoré (A) et d'au moins un agent d'interface (B), ledit polymère fluoré étant du poly(fluorure de vinylidène) (PVDF) homopolymère ou copolymère et contenant, en poids, au moins 50% de VDF,
• de 99 à 50% d'une polyoléfine (C),
tel que les deux constituants (A) et (B) ont été d'abord mélangés de façon intime c'est-à-dire par un moyen choisi parmi le compactage dans une presse chauffée, l'injection dans un moule chauffé, l'extrusion et le malaxage, à une température telle que l'agent d'interface(B) soit à l'état fondu dans sa masse ou à sa surface et le polymère fluoré (A) à l'état solide, sous forme d'une poudre, puis sont ensuite mélangés avec la polyoléfine (C),
le mélange de (A) et de (B) étant réalisé entre 20 et 100°C.

2. Mélange selon la revendication 1 dans lequel le PVDF contient, en poids, au moins 75% de VDF.

3. Mélange selon la revendication 2 dans lequel le PVDF contient, en poids, au moins 85% de VDF.

4. Mélange selon l'une quelconque des revendications 1 à 3 dans lequel le comonomère est l'HFP.

5. Mélange selon l'une quelconque des revendications précédentes dans lequel l'agent d'interface (B) est le poly(oxyéthylène)glycol.

6. Mélange selon l'une quelconque des revendications précédentes dans lequel la proportion de (A) et (B) est de 1 à 30% pour respectivement 99 à 70% de (C).

7. Mélange selon la revendication 6 dans lequel la proportion de (A) et (B) est de 1 à 10% pour respectivement 99 à 90% de (C).

8. Mélange selon l'une quelconque des revendications précédentes dans lequel les proportions respectives de (A) et (B) en poids sont telles que (A) / (B) est compris entre 10/90 et 90/10.

9. Mélange selon la revendication 6 dans lequel les proportions respectives de (A) et (B) en poids sont telles que (A) / (B) est compris entre 30/70 et 70/30.

10. Mélange selon la revendication 9 dans lequel les proportions respectives de (A) et (B) en poids sont telles que (A) / (B) est compris entre 40/60 et 60/40.

11. Utilisation du mélange maître de l'une quelconque des revendications précédentes comme processing aid pour extruder une polyoléfine (D).

12. Utilisation du mélange maître selon la revendication 11 dans laquelle la polyoléfine (D) est extrudée sous forme de film.

13. Utilisation selon l'une des revendications 11 ou 12 dans laquelle la proportion de mélange maître à introduire dans la polyoléfine à extruder (D) est telle que la quantité de (A)+(B) par rapport à (D) est de 100 ppm à 3000 ppm.

14. Procédé de préparation du mélange maître selon l'une des revendications 1 à 10 comportant les étapes suivantes :
1). on mélange au moins ledit polymère fluoré (A) et au moins ledit agent d'interface (B) de façon intime, c'est-à-dire par un moyen choisi parmi le compactage dans une presse chauffée, l'injection dans un moule chauffé, l'extrusion et le malaxage, à une température telle que l'agent d'interface (B) soit à l'état fondu dans sa masse ou à sa surface et le polymère fluoré (A) à l'état solide, sous forme d'une poudre, cette température étant comprise entre 20 et 100°C;
2). le mélange obtenu à l'étape 1) est ensuite incorporé dans une polyoléfine C) au moyen d'un outil de mélange choisi les extrudeuses et les malaxeurs pour former le mélange maître sous forme de granulés ;
3). éventuellement, les granulés de mélange maître de l'étape 2 sont rebroyés pour obtenir une poudre du mélange maître.

## Patentansprüche

1. Masterbatch, das bezogen auf das Gewicht enthält:
• 1 bis 50 % eines Gemisches aus zumindest einem fluorierten Polymer (A) und zumindest einem grenzflächenaktiven Stoff (B), wobei das fluorierte Polymer (A) ein Poly(vinylidenfluorid) (PVDF)-Homopolymer oder Poly(vinylidenfluorid) (PVDF)-Copolymer ist und mindestens 50 Gew.-% VDF aufweist,
• 99 bis 50 % Polyolefin (C),
wobei die beiden Bestandteile (A) und (B) zunächst innig, d. h. mit Hilfe eines Mittels, das unter Kompaktieren in einer erwärmten Presse, Einspritzen in eine erwärmte Form, Extrudieren und Kneten ausgewählt ist, bei einer solchen Temperatur vermischt wurden, dass der grenzflächenaktive Stoff (B) in der Masse oder an seiner Oberfläche im geschmolzenen Zustand vorliegt und das fluorierte Polymer (A) in Form eines Pulvers im festen Zustand vorliegt, wobei diese anschließend mit dem Polyolefin (C) vermischt wurden,
wobei das Mischen von (A) und (B) zwischen 20 und 100 °C erfolgt.

2. Masterbatch nach Anspruch 1, wobei das PVDF mindestens 75 Gew.-% VDF aufweist.

3. Masterbatch nach Anspruch 2, wobei das PVDF mindestens 85 Gew.-% VDF aufweist.

4. Masterbatch nach einem der Ansprüche 1 bis 3, wobei es sich bei dem Comonomer um HFP handelt.

5. Masterbatch nach einem der vorhergehenden Ansprüche, wobei es sich bei dem grenzflächenaktiven Stoff (B) um Polyoxyethylenglycol handelt.

6. Masterbatch nach einem der vorhergehenden Ansprüche, wobei der Mengenanteil von (A) und (B) 1 bis 30 % auf 99 bis 70 % (C) beträgt.

7. Masterbatch nach Anspruch 6, wobei der Mengenanteil von (A) und (B) 1 bis 10 % auf 99 bis 90 % (C) beträgt.

8. Masterbatch nach einem der vorhergehenden Ansprüche, wobei die jeweiligen auf das Gewicht bezogenen Mengenanteile von (A) und (B) so sind, dass (A)/(B) zwischen 10/90 und 90/10 liegt.

9. Masterbatch nach Anspruch 6, wobei die jeweiligen auf das Gewicht bezogenen Mengenanteile von (A) und (B) so sind, dass (A)/(B) zwischen 30/70 und 70/30 liegt.

10. Masterbatch nach Anspruch 9, wobei die jeweiligen auf das Gewicht bezogenen Mengenanteile von (A) und (B) so sind, dass (A)/(B) zwischen 40/60 und 60/40 liegt.

11. Verwendung eines Masterbatches nach einem der vorhergehenden Ansprüche als Verarbeitungshilfsmittel bei der Extrusion eines Polyolefins (D).

12. Verwendung eines Masterbatches nach Anspruch 11, wobei das Polyolefin (D) in Form einer Folie extrudiert wird.

13. Verwendung nach einem der Ansprüche 11 oder 12, wobei der Mengenanteil des in das zu extrudierende Polyolefin (D) einzuarbeitenden Masterbatches so ist, dass der Mengenanteil von (A) + (B) bezogen auf (D) im Bereich von 100 bis 3000 ppm liegt.

14. Verfahren zur Herstellung eines Masterbatches nach einem der Ansprüche 1 bis 10, das die folgenden Schritte umfasst:
1) man vermischt zumindest das fluorierte Polymer (A) und zumindest den grenzflächenaktiven Stoff (B) innig, d. h. mit Hilfe eines Mittels, das unter Kompaktieren in einer erwärmten Presse, Einspritzen in eine erwärmte Form, Extrudieren und Kneten ausgewählt ist, bei einer solchen Temperatur, dass der grenzflächenaktive Stoff (B) in der Masse oder an seiner Oberfläche im geschmolzenen Zustand vorliegt und das fluorierte Polymer (A) in Form eines Pulvers im festen Zustand vorliegt, wobei die Temperatur zwischen 20 und 100 °C liegt;
2) man arbeitet das in Schritt 1) hergestellte Gemisch anschließend mit Hilfe eines Mischwerkzeugs, das unter Extrudern und Knetern ausgewählt ist, in ein Polyolefin (C) ein, um das Masterbatch in Form von Granulat herzustellen;
3) man zerkleinert das Granulat des Masterbatches aus Schritt 2 eventuell zur Herstellung eines Pulvers des Masterbatches.

## Claims

1. Masterbatch comprising by weight:
• from 1 to 50% of a blend of at least one fluoropolymer (A) and at least one interfacial agent (B), said fluoropolymer being a polyvinylidene fluoride (PVDF) homopolymer or copolymer containing, by weight, at least 50% VDF;
• from 99 to 50% of a polyolefin (C);
• such that the two constituents (A) and (B) are intimately blended beforehand i.e. by a means chosen among compacting in a heated press, injecting into a heated mould, extruding or mixing, at a temperature selected such that the interfacial agent (B) is in the melt state throughout its mass or on its surface and the fluoropolymer (A) is in the solid state, in the form of a powder, and are then blended with the polyolefin (C), the blend of (A) and (B) being produced at between 20 and 100°C.

2. Masterbatch according to Claim 1, in which the PVDF contains, by weight, at least 75% VDF.

3. Masterbatch according to Claim 2, in which the PVDF contains, by weight, at least 85% VDF.

4. Masterbatch according to any one of Claims 1 to 3, in which the comonomer is HFP.

5. Masterbatch according to any one of the preceding claims, in which the interfacial agent (B) is polyoxyethylene glycol.

6. Masterbatch according to any one of the preceding claims, in which the proportion of (A) and (B) is from 1 to 30% per 99 to 70% of (C) respectively.

7. Masterbatch according to Claim 6, in which the proportion of (A) and (B) is from 1 to 10% per 99 to 90% of (C) respectively.

8. Masterbatch according to any one of the preceding claims, in which the respective proportions of (A) and (B) by weight are such that (A)/(B) is between 10/90 and 90/10.

9. Masterbatch according to Claim 6, in which the respective proportions of (A) and (B) by weight are such that (A)/(B) is between 30/70 and 70/30.

10. Masterbatch according to Claim 9, in which the respective proportions of (A) and (B) by weight are such that (A)/(B) is between 40/60 and 60/40.

11. Use of the masterbatch of any one of the preceding claims as a processing aid for extruding a polyolefin (D).

12. Use of the masterbatch according to Claim 11, in which the polyolefin is extruded in film form.

13. Use according to either of Claims 11 and 12, in which the proportion of masterbatch to be introduced into the polyolefin (D) to be extruded is such that the quantity of (A)+(B) with respect to (D) is from 100 ppm to 3000 ppm.

14. Process for preparing a masterbatch, comprising the following steps:
1). at least one fluoropolymer (A) and at least one interfacial agent (B) are mixed intimately beforehand i.e. by a means chosen among compacting in a heated press, injecting into a heated mould, extruding or mixing, at a temperature selected such that the interfacial agent (B) is in the melt state throughout its mass or on its surface and the fluoropolymer (A) is in the solid state, in the form of a powder, and are then blended with the polyolefin (C), the blend of (A) and (B) being produced at between 20 and 100°C;
2). the mixture obtained in step 1). is subsequently incorporated into a polyolefin (C), to form the masterbatch in granule form;
3). optionally, the masterbatch granules of step 2 are reground to give a powder of the masterbatch.
